# EUROPEAN PATENT SPECIFICATION

(11) **EP 3 798 568 B1**
(45) Date of publication and mention of the grant of the patent: **23.04.2025**
(21) Application number: 20196587.8
(22) Date of filing: 17.09.2020
(51) Int. Cl.: G01B 11/25, G02C 13/00

(54) **EYEGLASS FRAME SHAPE MEASUREMENT APPARATUS**
GERÄT ZUR MESSUNG VON BRILLENFASSUNGSFORMEN
APPAREIL DE MESURE DE FORME DE MONTURE DE LUNETTES

(30) Priority: 30.09.2019 JP 2019178851
(43) Date of publication of application: 31.03.2021
(73) Proprietor: Nidek Co., Ltd., Gamagori-shi, Aichi, 443-0038 (JP)
(72) Inventor: TAKII, Michihiro, Hiroishi-cho, Gamagori, Aichi 4430038 (JP); TAKEICHI, Kyoji, Hiroishi-cho, Gamagori, Aichi 4430038 (JP); NAKAKO, Yuya, Hiroishi-cho, Gamagori, Aichi 4430038 (JP); MINOZZI, Mattia, 35020 Albignasego (PD) (IT); CODOGNO, Nicola, 35020 Albignasego (PD) (IT); CARRARO, Federico, 35020 Albignasego (PD) (IT)
(74) Representative: Hoefer & Partner Patentanwälte mbB

(56) References cited:
- DE-C1- 19 919 311
- FR-A1- 2 713 758
- US-A- 6 122 063

## Description

### TECHNICAL FIELD

The present disclosure relates to an eyeglass frame shape measurement apparatus for acquiring a shape of an eyeglass frame.

### BACKGROUND

An eyeglass frame shape measurement apparatus is known in which a groove of a rim of an eyeglass frame is irradiated with a measurement light beam and a reflected light beam of the measurement light beam reflected on the groove of the rim of the eyeglass frame is received to acquire a cross-sectional shape of the groove of the rim of the eyeglass frame, based on the reflected light beam (for example, refer to International Publication No. WO2019/026416).

In this eyeglass frame shape measurement apparatus, an inside of the rim of the eyeglass frame cannot be properly irradiated with the measurement light beam. In some cases, there is a possibility that the cross-sectional shape of the groove of the rim of the eyeglass frame may not be acquired.
FR 2713758 A1 describes a system which includes an optical system for picking up image points which are characteristic of the internal shape, and an analysis system for determining the spatial coordinates of these points in order to determine the overall shape and profile of a frame. The information is connected by means of a laser light source producing a beam of coherent light whose impact on the frame contour produces a point of light. The reflected light passes through a lens and is focussed on to a photodetector ar ray such that the coordinates of the image point can be determined.
DE 19919311 C1 describes a method and device for contactless scanning of a groove in the opening of a spectacle frame and/or a circumference of a spectacle lens or a shaped lens and for storing the values obtained or for directly controlling the processing of a raw lens with the aid of these values, in which the groove or the circumference is scanned over 360° in a first plane lying above or below the plane of the opening of the spectacle frame or the spectacle lens or the shaped lens, a renewed scanning over 360° of the groove or the circumference in a second plane that is lowered or raised by an amount compared to the first plane is carried out, the scanning is repeated over 360° in further levels, each lowered or raised by an amount, until a level is reached in which there is no signal characterizing the groove or a groove area or the circumference and the one spaced apart by level-recorded measured values evaluated in an evaluation unit.
US 6,122,063 A describes a measuring system for non-contacting detection of a three-dimensional shape of a groove peripherally extending in a spectacle frame, comprising a light source directing its light beam onto the groove or having its beam deflected thereon by means of an optical deflector system, an optical imaging system which projects the light reflected at the groove onto an optical detector unit and which is disposed in a centered position relative to the groove to be measured on the spectacle frame, a holding means supporting the spectacle frame, which is supported for rotation relative to the light source, the detector system and the optical imaging system about a centering axis of a surface inscribed by the peripheral groove of the spectacle frame, as well as an evaluation unit for determining the three-dimensional shape of the groove, which operates in correspondence with the triangulation principle.

### SUMMARY

In view of the above-described related art, a technical object of the present disclosure is to provide an eyeglass frame shape measurement apparatus capable of satisfactorily acquiring a cross-sectional shape of a groove of a rim of an eyeglass frame.

This object is solved by the features of the independent claim. The dependent claims contain advantageous embodiments of the present invention.

.

### BRIEF DESCRIPTION OF DRAWINGS

FIG. 1 is an external view of a measurement apparatus.
FIG. 2 is a top view of a frame holding unit.
FIG. 3A, FIG. 3B, and FIG. 3C are schematic views of a holding unit and an eyeglass frame measurement optical system.
FIG. 4 is an example of a disposition of a light-projecting optical axis of a light-projecting optical system.
FIG. 5 is an example of a disposition of an imaging optical axis of a light-receiving optical system.
FIG. 6 is a view illustrating a disposition relationship between the light-projecting optical axis of the light-projecting optical system and the imaging optical axis of the light-receiving optical system.
FIG. 7 is a top perspective view of a measurement unit.
FIG. 8 is a bottom perspective view of the measurement unit.
FIG. 9 is a top perspective view of a Z-direction movement unit and a Y-direction movement unit.
FIG. 10 is a schematic view of a rotation unit.
FIG. 11 is a view illustrating a control system of a measurement apparatus.
FIG. 12A and FIG. 12B are views illustrating an acquisition position of a captured image of a rim.
FIG. 13A and FIG. 13B illustrate states where the light-projecting optical axis of the light-projecting optical system is disposed to be tilted in a vertical direction, and the imaging optical axis of the light-receiving optical system is disposed to be tilted in a horizontal direction and the vertical direction.
FIG. 14 is an example of the captured image of the rim.
FIG. 15 is a view for describing a parameter acquired from a cross-sectional shape of a groove of the rim.

### DETAILED DESCRIPTION

### <Outline>

An outline of an eyeglass frame shape measurement apparatus according to an illustrative embodiment of the present disclosure will be described. In the present illustrative embodiment, an upward-downward direction of the eyeglass frame shape measurement apparatus will be referred to as a Z-direction, a rightward-leftward direction will be referred to as an X-direction, and a forward-rearward direction will be referred to as a Y-direction. In other words, in an eyeglass frame held by the eyeglass frame shape measurement apparatus, the forward-rearward direction of a rim when the eyeglass frame is worn will be referred to as the Z-direction, the rightward-leftward direction (direction of a right end and a left end) of the rim when the eyeglass frame is worn will be referred to as the X-direction, and the upward-downward direction (direction of an upper end and a lower end) will be referred to as the Y-direction. Items classified by an angle bracket of <> below can be used independently or in association with each other.

### <Holding Unit>

The eyeglass frame shape measurement apparatus according to the present illustrative embodiment includes a holding unit (for example, a holding unit 25). The holding unit integrally holds a light-projecting optical system and a light-receiving optical system (to be described later). That is, the holding unit always holds the light-projecting optical system and the light-receiving optical system to have a constant positional relationship. For example, even when the holding unit is moved by changing means and changing control means (to be described later), the positional relationship between the light-projecting optical system and the light-receiving optical system is maintained at each measurement position.

### <Light-Projecting Optical System>

The eyeglass frame shape measurement apparatus according to the present illustrative embodiment includes a light-projecting optical system (for example, a light-projecting optical system 30a). The light-projecting optical system has a light source (for example, a light source 31), and irradiates a groove of a rim of the eyeglass frame with a measurement light beam emitted from the light source. At least one light source may be used as the light source. For example, one light source may be used. **In** addition, for example, a plurality of light sources may be used.

The light-projecting optical system may have an optical member. For example, at least one of a lens, a mirror, and a diaphragm may be used as the optical member. As a matter of course, for example, other optical members different from the above-described optical members may be used as the optical member. For example, when the diaphragm is used as the optical member, a focal depth of the measurement light beam can be deepened. **In** this way, in a case where the light-projecting optical system has the optical member, the measurement light beam emitted from the light source may irradiate toward the groove of the rim of the eyeglass frame via each of the optical members.

The light-projecting optical system may be configured so that the groove of the rim of the eyeglass frame is irradiated with the measurement light beam emitted from the light source. For example, the light-projecting optical system may be configured to have at least the light source. In addition, the light-projecting optical system may be configured such that the groove of the rim of the eyeglass frame is irradiated with the measurement light beam emitted from the light source via a member different from the optical member.

For example, the measurement light beam emitted by the light-projecting optical system in irradiating the groove of the rim of the eyeglass frame may be a measurement light beam having a width (for example, a slit-shaped measurement light beam). **In** this case, the light-projecting optical system may irradiate the groove of the rim of the eyeglass frame with the measurement light beam emitted from the light source to form an optical cutting plane on the groove of the rim.

For example, in a case where the light-projecting optical system irradiates the groove of the rim of the eyeglass frame with the measurement light beam having a width, a light source that emits a slit-shaped light beam may be used as the light source. For example, in this case, the light source may be a point light source. For example, a plurality of the point light sources may be disposed and aligned to irradiate the groove of the rim of the eyeglass frame with the measurement light beam having the width. In addition, for example, a spot-shaped light beam emitted from the point light source may be scanned to irradiate the groove of the rim of the eyeglass frame with the measurement light beam having the width. In addition, for example, the spot-shaped measurement light beam emitted from the point light source may be diffused by an optical member to irradiate the groove of the rim of the eyeglass frame with the measurement light beam having the width. As a matter of course, various types of light sources different from the above-described light sources may be used to irradiate the groove of the rim of the eyeglass frame with the measurement light beam having the width.

### <Light-Receiving Optical System>

The eyeglass frame shape measurement apparatus according to the present illustrative embodiment includes a light-receiving optical system (for example, a light-receiving optical system 30b). The light-receiving optical system has a detector (for example, the detector 37), and the detector receives a reflected light beam of the measurement light beam reflected on the groove of the rim of the eyeglass frame. At least one detector may be used as the detector. For example, one detector may be used. In addition, for example, a plurality of the detectors may be used.

The light-receiving optical system may have an optical member. For example, at least one of a lens, a mirror, and a diaphragm may be used as the optical member. As a matter of course, for example, other optical members different from the above-described optical members may be used as the optical member. In this way, in a case where the light-receiving optical system has the optical member, the reflected light beam of the measurement light beam reflected on the groove of the rim of the eyeglass frame may be received by the detector via each of the optical members.

The light-receiving optical system may be configured so that the reflected light beam of the measurement light beam reflected on the groove of the rim of the eyeglass frame is received by the detector. For example, the light-receiving optical system may be configured to have at least the detector. In addition, the light-receiving optical system may be configured so that the reflected light beam of the measurement light beam reflected on the groove of the rim of the eyeglass frame is received by the detector via a member different from the optical member.

In a case where the light-projecting optical system irradiates the groove of the rim of the eyeglass frame with the measurement light beam emitted from the light source to form an optical cutting plane on the groove of the rim, the light-receiving optical system may cause the detector to receive the reflected light beam (for example, scattered light or regularly reflected light) on the optical cutting plane of the groove of the rim.

### <Positional Relationship between Light-Projecting Optical System and Light-Receiving Optical System>

In the present illustrative embodiment, the light-projecting optical system and the light-receiving optical system are disposed inside the groove of the rim of the eyeglass frame (in other words, inside the rim of the eyeglass frame in a radius vector direction). For example, the light-projecting optical system and the light-receiving optical system are integrally held by the above-described holding unit, and are disposed inside the rim of the eyeglass frame. Therefore, a positional relationship between the light-projecting optical system and the light-receiving optical system is always constant, and a cross-sectional shape of the groove of the rim can be acquired with a simple configuration.

In addition, in the present illustrative embodiment, the light-projecting optical system and the light-receiving optical system may be configured so that the cross-sectional shape of the groove of the rim of the eyeglass frame can be acquired. For example, the light-projecting optical system and the light-receiving optical system may have an optical system configuration based on a Scheimpflug principle. As a matter of course, the light-projecting optical system and the light-receiving optical system may have a different optical system configuration instead of the optical system configuration based on the Scheimpflug principle.

For example, a light-projecting optical axis (for example, a light-projecting optical axis L1) of the light-projecting optical system may be disposed such that the groove of the rim of the eyeglass frame is irradiated with the measurement light beam in an oblique direction with respect to a tangent line of the groove of the rim of the eyeglass frame. In this manner, an optical cutting plane may be formed by cutting the groove of the rim in the oblique direction with respect to the tangent line of the rim.

In this case, the light-projecting optical axis of the light-projecting optical system may be disposed such that the groove of the rim is irradiated with the measurement light beam in the oblique direction on a radius vector plane of the rim (that is, on a horizontal plane of the rim, in other words, on an XY-plane of the rim) with respect to the tangent line of the groove of the rim. In addition, in this case, the light-projecting optical axis of the light-projecting optical system may be disposed such that the groove of the rim is irradiated with the measurement light beam in the oblique direction on the radius vector plane of the rim, and in a vertical direction with respect to the radius vector plane of the rim. As an example, the light-projecting optical axis of the light-projecting optical system may be disposed such that the groove of the rim is irradiated with the measurement light beam in the oblique direction on the radius vector plane of the rim, and in an upper direction of the radius vector plane of the rim. In addition, as an example, the light-projecting optical axis of the light-projecting optical system may be disposed such that the groove of the rim is irradiated with the measurement light beam in the oblique direction on the radius vector plane of the rim, and in a lower direction of the radius vector plane of the rim.

In addition, for example, the light-projecting optical axis of the light-projecting optical system may be disposed such that the groove of the rim of the eyeglass frame is irradiated with the measurement light beam in a direction perpendicular to the tangent line of the groove of the rim of the eyeglass frame. In this manner, an optical cutting plane may be formed by cutting the groove of the rim in a direction orthogonal to the tangent line of the rim.

In this case, the light-projecting optical axis of the light-projecting optical system may be disposed such that the tangent line of the groove of the rim is irradiated with the measurement light beam in the perpendicular direction on the radius vector plane of the rim. In addition, in this case, the light-projecting optical axis of the light-projecting optical system may be disposed such that the tangent line of the groove of the rim is irradiated with the measurement light beam in the perpendicular direction on the radius vector plane of the rim, and in the vertical direction with respect to the radius vector plane of the rim. As an example, the light-projecting optical axis of the light-projecting optical system may be disposed such that the tangent line of the groove of the rim is irradiated with the measurement light beam in the perpendicular direction on the radius vector plane of the rim, and in the upper direction of the radius vector plane of the rim. **In** addition, for example, the light-projecting optical axis of the light-projecting optical system may be disposed such that the tangent line of the groove of the rim is irradiated with the measurement light beam in the perpendicular direction on the radius vector plane of the rim, and in the lower direction of the radius vector plane of the rim.

For example, in the present illustrative embodiment, a light-projecting and light-receiving plane formed by the light-projecting optical axis of the light-projecting optical system and a light-receiving optical axis (for example, an imaging optical axis L2) of the light-receiving optical system may be disposed such that the groove of the rim of the eyeglass frame is tilted with respect to a cutting plane cut by the measurement light beam. For example, the light-projecting and light-receiving plane formed by the light-projecting optical axis and the light-receiving optical axis may be disposed to be tilted with respect to the cutting plane when viewed in a cutting direction of the rim (optical axis direction of the light-projecting optical axis). In addition, for example, the light-projecting and light-receiving plane formed by the light-projecting optical axis and the light-receiving optical axis may be disposed to be tilted with respect to the cutting plane of the rim when viewed in a direction orthogonal to the cutting plane of the rim. As a matter of course, for example, the light-projecting and light-receiving plane formed by the light-projecting optical axis and the light-receiving optical axis may be disposed to be tilted with respect to the cutting plane when viewed in the cutting direction of the rim, and to be tilted with respect to the cutting plane when viewed in a contact plane direction of the rim.

In addition, for example, in the present example, the light-projecting and light-receiving plane formed by the light-projecting optical axis and the light-receiving optical axis may be disposed to be tilted with respect to the radius vector plane of the rim. For example, the light-projecting and light-receiving plane formed by the light-projecting optical axis and the light-receiving optical axis may be disposed to be tilted in the horizontal direction with respect to the radius vector plane of the rim. In addition, for example, the light-projecting and light-receiving plane formed by the light-projecting optical axis and the light-receiving optical axis may be disposed to be tilted in the perpendicular direction with respect to the radius vector plane of the rim.

The light-projecting and light-receiving plane formed by the light-projecting optical system and the light-receiving optical system may be in a tilted state, except in a state where the light-projecting and light-receiving plane formed by the light-projecting optical system and the light-receiving optical system is disposed horizontally with the radius vector plane of the rim. In other words, the light-projecting optical axis of the light-projecting optical system is not disposed on the cutting plane where the groove of the rim of the eyeglass frame is cut by the measurement light beam, and is disposed to be tilted at a first tilt angle in the horizontal direction with respect to an axis perpendicular to the cutting plane, and to be tilted at a second tilt angle in the vertical direction. That is, the light-receiving optical axis of the light-receiving optical system is disposed to be tilted at the first tilt angle in the horizontal direction (on the radius vector plane of the rim) with respect to the axis perpendicular to the cutting plane where the groove of the rim of the eyeglass frame is cut by the measurement light beam, and to be tilted at the second tilt angle in the perpendicular direction with respect to the horizontal direction.

For example, in the above-described configuration in which the light-receiving optical axis of the light-receiving optical system is tilted in the horizontal direction and the vertical direction, the light-receiving optical axis of the light-receiving optical system may receive the reflected light beam in any direction of the horizontal direction with respect to the axis perpendicular to the cutting plane of the groove of the rim of the eyeglass frame. As an example, the light-receiving optical axis of the light-receiving optical system may be disposed to receive the reflected light beam in a right direction (that is, from a right side on the radius vector plane of the rim) with respect to the axis perpendicular to the cutting plane of the groove of the rim of the eyeglass frame. In addition, as an example, the light-receiving optical axis of the light-receiving optical system may be disposed to receive the reflected light beam in a left direction (that is, from a left side on the radius vector plane of the rim) with respect to the axis perpendicular to the cutting plane of the groove of the rim of the eyeglass frame. In these configurations, a size of the first tilt angle of the light-receiving optical axis of the light-receiving optical system may be determined, based on the Scheimpflug principle.

In addition, for example, in the above-described configuration in which the light-receiving optical axis of the light-receiving optical system is tilted in the horizontal direction and the vertical direction, the light-receiving optical axis of the light-receiving optical system may receive the reflected light beam in any direction of the vertical direction with respect to the axis perpendicular to the cutting plane of the groove of the rim of the eyeglass frame. As an example, the light-receiving optical axis of the light-receiving optical system may be disposed to receive the reflected light beam in the upper direction (that is, from an upper side on the radius vector plane of the rim) with respect to the axis perpendicular to the cutting plane of the groove of the rim of the eyeglass frame. In addition, as an example, the light-receiving optical axis of the light-receiving optical system may be disposed to receive the reflected light beam in the lower direction (that is, from a lower side on the radius vector plane of the rim) with respect to the axis perpendicular to the cutting plane of the groove of the rim of the eyeglass frame. In these configurations, a size of the second tilt angle of the light-receiving optical axis of the light-receiving optical system may be determined, based on the Scheimpflug principle.

According to the invention, the light-projecting optical axis of the light-projecting optical system is disposed to be tilted with respect to the radius vector plane of the groove of the rim of the eyeglass frame (in other words, on the upper side or the lower side of the radius vector plane of the rim). In addition, the light-receiving optical axis of the light-receiving optical system is not disposed on the cutting plane of the groove of the rim of the eyeglass frame, and is disposed to be tilted at the first tilt angle in the horizontal direction (in other words, on the radius vector plane of the rim) with respect to the axis perpendicular to the cutting plane of the groove of the rim of the eyeglass frame, and to be tilted at the second tilt angle in the vertical direction (on the upper side or the lower side of the radius vector plane of the rim). Therefore, the holding unit can be designed to have a reduced space. The rim and the optical system are less likely to interfere with each other in a corner portion of the rim. Therefore, the cross-sectional shape of the groove of the rim can be satisfactorily acquired.

It is preferable that a tilt angle at which the light-projecting optical axis of the light-projecting optical system is tilted with respect to the radius vector plane of the groove of the rim, a first tilt angle at which the light-receiving optical axis of the light-receiving optical system is tilted in the horizontal direction with respect to the axis perpendicular to the cutting plane of the groove of the rim, and a second tilt angle at which the light-receiving optical axis of the light-receiving optical system is tilted in the vertical direction with respect to the axis perpendicular to the cutting plane of the groove of the rim are respectively set to angles at which the holding unit can be designed to have the further reduced space. In addition, it is preferable to set the angle so that the cross-sectional shape of the groove of the rim is less likely to be damaged when the cross-sectional shape of the groove of the rim is acquired.

### <Changing Means>

The eyeglass frame shape measurement apparatus according to the present illustrative embodiment includes changing means (for example, a movement unit 210 and a rotation unit 260). The changing means moves the holding unit with respect to the eyeglass frame. In this manner, the changing means may change a relative position of the holding unit with respect to the groove of the rim of the eyeglass frame. That is, the changing means may relatively change an irradiation position of the measurement light beam by the light-projecting optical system with respect to the groove of the rim of the eyeglass frame, and may relatively change a light-receiving position of the reflected light beam by the light-receiving optical system with respect to the groove of the rim of the eyeglass frame.

For example, the changing means may include X-direction movement means (for example, an X-direction movement unit 240) for moving the holding unit with respect to the eyeglass frame in the X-direction. The X-direction movement means may have driving means (for example, a motor 245). In addition, for example, the changing means may include Y-direction movement means (for example, a Y-direction movement unit 230) for moving the holding unit in the Y-direction with respect to the eyeglass frame. The Y-direction movement means may have driving means (for example, a motor 235). In addition, for example, the changing means may include Z-direction movement means (for example, a Z-direction movement unit 220) for moving the holding unit with respect to the eyeglass frame in the Z-direction. The Z-direction movement means may have driving means (for example, a motor 225). In addition, for example, the changing means may include rotation means (for example, a rotation unit 260) for rotating the holding unit with respect to the eyeglass frame. The rotation means may have driving means (for example, a motor 265).

In the present illustrative embodiment, the changing means may be configured to separately move the light-projecting optical system and the light-receiving optical system with respect to the groove of the rim of the eyeglass frame. That is, the changing means may relatively change the irradiation position of the measurement light beam by the light-projecting optical system with respect to the groove of the rim of the eyeglass frame. In addition, the changing means may relatively change the light-receiving position of the reflected light beam by the light-receiving optical system with respect to the groove of the rim of the eyeglass frame. In this case, the changing means may have first changing means for moving the light-projecting optical system and second changing means for moving the light-receiving optical system.

### <Changing Control Means>

The eyeglass frame shape measurement apparatus according to the present illustrative embodiment includes changing control means (for example, a control unit 50). The changing control means controls the changing means. For example, the changing control means may control at least one driving of driving means included in the X-direction moving means, driving means included in the Y-direction moving means, driving means included in the Z-direction moving means, and driving means included in the rotating means. In this manner, the changing control means may move the holding unit to change a measurement position with respect to the groove of the rim of the eyeglass frame. As an example, the changing control means may control at least one driving of the respective driving means. In this manner, the changing control means may move the holding unit to change the measurement position at each radius vector angle with respect to the groove of the rim of the eyeglass frame.

For example, in the present illustrative embodiment, the changing control means may move the holding unit inside the rim of the eyeglass frame to change the measurement position with respect to the groove of the rim of the eyeglass frame. In this manner, the irradiation position of the measurement light beam by the light-projecting optical system and the light-receiving position of the reflected light beam by the light-receiving optical system are moved inside the rim of the eyeglass frame, and the measurement position with respect to the groove of the rim of the eyeglass frame is changed. For example, in this manner, compared to a configuration in which at least a portion of the optical member of the light-projecting optical system and at least a portion of the optical member of the light-receiving optical system are disposed outside the rim of the eyeglass frame, and the irradiation position of the measurement light beam and the light-receiving position of the reflected light beam are moved to change the measurement position with respect to the groove of the rim of the eyeglass frame, the eyeglass frame shape measurement apparatus can be further downsized.

In addition, in the present illustrative embodiment, in a case where first changing means for moving the light-projecting optical system and second changing means for moving the light-receiving optical system with respect to the groove of the rim of the eyeglass frame are provided as the above-described changing means, first changing control means for controlling the first changing means and second changing control means for controlling the second changing means may be provided as the changing control means. In this case, the first changing control means may move the irradiation position of the measurement light beam by the light-projecting optical system, and the second changing control means may move the light-receiving position of the reflected light beam by the light-receiving optical system, inside the rim of the eyeglass frame. In this manner, the measurement position with respect to the groove of the rim of the eyeglass frame may be changed. In this configuration in which the first changing means and the second changing means are provided, the first changing control means and the second changing control means may change the measurement position with respect to the groove of the rim of the eyeglass frame to maintain a positional relationship between the light-projecting optical system and the light-receiving optical system at each of measurement positions.

### <Correction Means>

The eyeglass frame shape measurement apparatus according to the present illustrative embodiment includes correction means (for example, the control unit 50). The correction means corrects the cross-sectional shape of the groove of the rim of the eyeglass frame, based on the first tilt angle and the second tilt angle on the light-receiving optical axis of the light-receiving optical system.

The cross-sectional shape of the groove of the rim of the eyeglass frame may be an image (image data). In this case, the correction means may correct the image indicating the cross-sectional shape of the groove of the rim of the eyeglass frame, based on the first tilt angle and the second tilt angle on the light-receiving optical axis of the light-receiving optical system. In addition, for example, the cross-sectional shape of the groove of the rim of the eyeglass frame may be a signal (signal data). In this case, the correction means may correct the signal indicating the cross-sectional shape of the groove of the rim of the eyeglass frame, based on the first tilt angle and the second tilt angle on the light-receiving optical axis of the light-receiving optical system.

For example, the correction means may be configured to be capable of correcting a distortion of the cross-sectional shape of the groove of the rim of the eyeglass frame, which is caused by disposing and tilting the light-receiving optical axis of the light-receiving optical system. As an example, the correction means may correct the cross-sectional shape of the groove of the rim of the eyeglass frame by a trigonometric function using the first tilt angle and the second tilt angle on the light-receiving optical axis of the light-receiving optical system. As a matter of course, the correction means may correct the cross-sectional shape of the groove of the rim of the eyeglass frame by using calculation different from the trigonometric function, based on the first tilt angle and the second tilt angle on the light-receiving optical axis of the light-receiving optical system.

For example, the correction means may correct the cross-sectional shape of the groove of the rim of the eyeglass frame in the horizontal direction, based on the first tilt angle on the light-receiving optical axis of the light-receiving optical system. Thereafter, the correction means may further correct the corrected cross-sectional shape of the groove of the rim of the eyeglass frame in the vertical direction, based on the second tilt angle on the light-receiving optical axis of the light-receiving optical system. In addition, for example, the correction means may correct the cross-sectional shape of the groove of the rim of the eyeglass frame in the vertical direction, based on the second tilt angle on the light-receiving optical axis of the light-receiving optical system. Thereafter, the correction means may further correct the corrected cross-sectional shape of the groove of the rim of the eyeglass frame in the horizontal direction, based on the first tilt angle on the light-receiving optical axis of the light-receiving optical system. In addition, for example, the correction means may correct the cross-sectional shape of the groove of the rim of the eyeglass frame, based on a tilt angle obtained by combining the first tilt angle and the second tilt angle with each other on the light-receiving optical axis of the light-receiving optical system.

### <Example>

An example of the eyeglass frame shape measurement apparatus (hereinafter, a measurement apparatus) in the present illustrative embodiment will be described. The X-direction and the Y-direction of the eyeglass frame shape measurement apparatus are respectively the rightward-leftward direction and the upward-downward direction of the eyeglass frame held by a frame holding unit (to be described later). In addition, an XY-direction of the eyeglass frame shape measurement apparatus is a direction parallel to the radius vector direction (measurement plane of the rim) of the rim of the eyeglass frame held by the frame holding unit (to be described later), and the Z-direction of the eyeglass frame shape measurement apparatus is a direction perpendicular to the radius vector direction of the rim of the eyeglass frame.

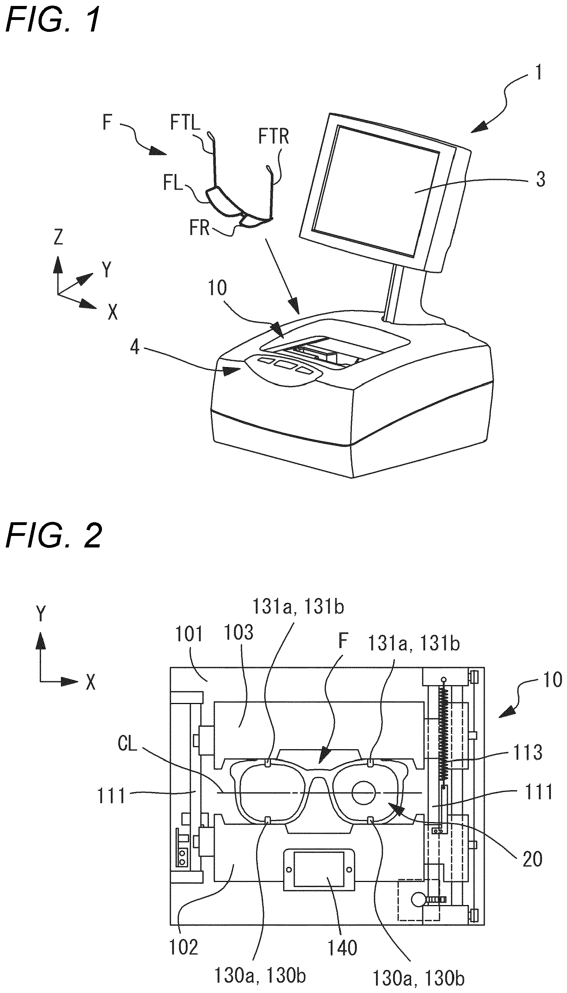

FIG. 1 is an external view of the measurement apparatus 1. In the present example, the rightward-leftward direction (horizontal direction) of the measurement apparatus 1 is represented as the X-direction, the upward-downward direction (vertical direction) is represented as the Y-direction, and the forward-rearward direction is represented as the Z-direction. For example, the measurement apparatus 1 includes a monitor 3, a switch unit 4, a frame holding unit 10, and a measurement unit 20.

The monitor 3 displays various information (for example, a cross-sectional shape 41 in a groove FA of the rim of an eyeglass frame F and a shape of the rim of the eyeglass frame F). The monitor 3 is a touch panel, and the monitor 3 may also function as the switch unit 4. A signal corresponding to an operation instruction input from the monitor 3 is output to the control unit 50 (to be described later).

The switch unit 4 is used for performing various settings (for example, starting measurement). A signal corresponding to an operation instruction input from the switch unit 4 is output to the control unit 50 (to be described later).

### <Frame Holding Unit>

FIG. 2 is a top view of the frame holding unit 10. The frame holding unit 10 in FIG. 2 is in a state of holding the eyeglass frame F.

The frame holding unit 10 holds the eyeglass frame F in a desired state. For example, the frame holding unit 10 includes a holder base 101, a first slider 102, a second slider 103, and an opening/closing movement mechanism.

For example, a front slider 102 and a rear slider 103 for horizontally holding the eyeglass frame F are mounted on the holder base 101. For example, the horizon may be a substantial horizon. For example, the front slider 102 and the rear slider 103 are disposed to be slidable on two rails 111 while facing each other around a center line CL, and are always pulled by a spring 113 in a direction toward the center line CL of both of these.

For example, the front slider 102 has two clamp pins 130a and 130b for clamping the rim of the eyeglass frame F in a thickness direction. For example, the rear slider 103 has two clamp pins 131a and 131b for clamping the rim of the eyeglass frame F in the thickness direction. In addition, for example, when a template is measured, the front slider 102 and the rear slider 103 are opened, and a well-known template holding jig is disposed and used at a predetermined mounting position 140. For example, as a configuration of the frame holding unit 10, a well-known configuration disclosed in JP-A-2000-314617 can be used.

For example, in the eyeglass frame F, a lower side of the rim when spectacles are worn is located on the front slider 102 side, and an upper side of the rim is located on the rear slider 103 side. For example, the eyeglass frame F is held in a predetermined measurement state by the clamp pins located on the lower side and the upper side of the respective right and left rims.

In the present example, a configuration of the clamp pins 130a and 130b and the clamp pins 131a and 131b has been described as an example of a configuration for restricting the position of the rim in the forward-rearward direction. However, the example is not limited thereto. A well-known mechanism may be used. For example, as a mechanism for fixing the right and left rims in the forward-rearward direction, a contact member (restriction member) having a V-shaped groove may be provided for each of the right and left rims.

### <Measurement Unit>

The measurement unit 20 is disposed in a lower portion of the frame holding unit 10. For example, the measurement unit 20 includes a base part 211, a holding unit 25, a movement unit 210, and a rotation unit 260.

The base part 211 is a rectangular frame stretching in the X-direction and the Y-direction, and is provided in a lower portion of the frame holding unit 10. The holding unit 25 holds a frame measurement optical system 30 (to be described later). The movement unit 210 moves the holding unit 25 in the X-direction, the Y-direction, and the Z-direction so that the holding unit 25 is relatively moved with respect to the frame F. The rotation unit 260 rotates the holding unit 25 around a rotation axis L0.

### <Holding Unit>

The holding unit 25 will be described. The holding unit 25 has an opening portion 26. For example, the opening portion 26 may have a transparent panel that covers the opening portion 26. The holding unit 25 internally holds an eyeglass frame measurement optical system 30.

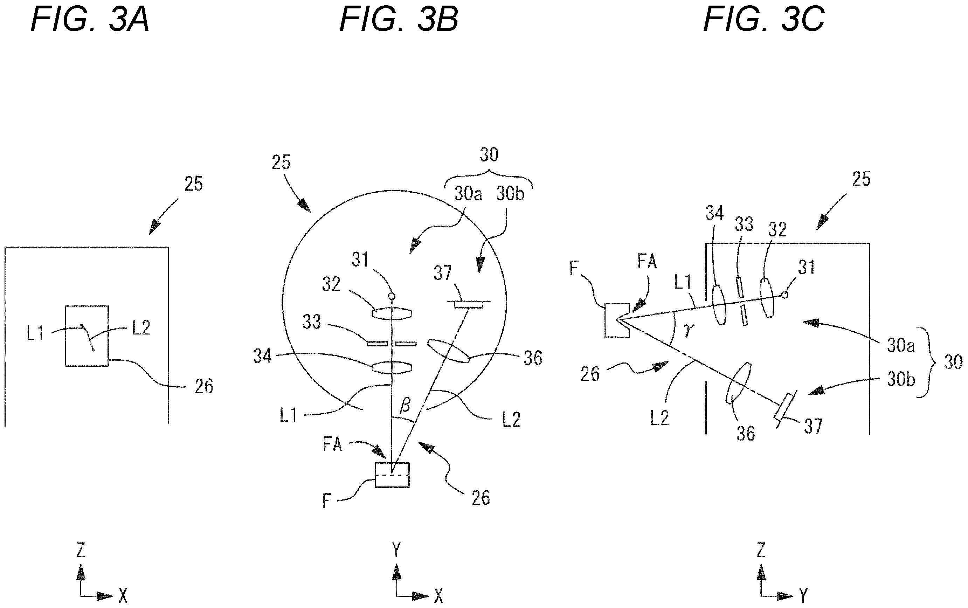

FIG. 3A, 3B, and 3C are schematic views of the holding unit 25 and the eyeglass frame measurement optical system 30. FIG. 3A is a view illustrating the holding unit 25 in a front plane direction. FIG. 3B is a view illustrating the holding unit 25 in an upper plane direction. FIG. 3C is a view illustrating the holding unit 25 in a side plane direction.

For example, the eyeglass frame measurement optical system 30 is configured to include a light-projecting optical system 30a and a light-receiving optical system 30b. For example, the light-projecting optical system 30a irradiates the groove of the rim of the eyeglass frame F with the measurement light beam emitted from the light source. For example, the light-receiving optical system 30b causes a detector to receive the reflected light beam of the measurement light beam reflected on the groove of the rim of the eyeglass frame F.

In the present example, the holding unit 25 is disposed inside the rim of the eyeglass frame F (in other words, inside the rim of the eyeglass frame F in the radius vector direction). That is, in the present example, the light-projecting optical system 30a and the light-receiving optical system 30b are disposed inside the rim of the eyeglass frame F. Therefore, the measurement light beam emitted from the light-projecting optical system 30a is emitted toward the outside of the holding unit 25 from the inside of the holding unit 25, passes through the opening portion 26, and is irradiated from the inside of the rim to the groove of the rim. Therefore, the reflected light beam of the measurement light beam reflected on the groove of the rim of the eyeglass frame F is guided from the groove of the rim toward the inside of the rim, passes through the opening portion 26, and is guided from the outside of the holding unit 25 toward the light-receiving optical system 30b inside the holding unit 25.

### <Light-Projecting Optical System>

For example, the light-projecting optical system 30a includes a light source 31, a lens 32, a slit plate 33, and a lens 34. For example, the measurement light beam emitted from the light source 31 is focused by the lens 32, and illuminates the slit plate 33. For example, the measurement light beam that illuminates the slit plate 33 serves as a measurement light beam that is limited to a thin slit shape by the slit plate 33, and is used in irradiating the groove FA of the rim of the eyeglass frame F via the lens 34. That is, the groove FA of the rim of the eyeglass frame F is irradiated with slit light. In this manner, the groove FA of the rim of the eyeglass frame F is illuminated in a form of being optically cut by the slit light.

### <Light-Receiving Optical System>

For example, the light-receiving optical system 30b includes a lens 36 and a detector 37 (for example, a light-receiving element). For example, the light-receiving optical system 30b is configured to acquire the cross-sectional shape of the groove FA of the rim of the eyeglass frame F in an oblique direction. For example, the light-receiving optical system 30b is configured to acquire the cross-sectional shape of the groove FA of the rim of the eyeglass frame F, based on the Scheimpflug principle.

For example, the lens 36 guides the reflected light beam of the groove FA of the rim (for example, scattered light of the groove FA of the rim or regularly reflected light of the groove FA of the rim) which is acquired by reflection on the groove FA of the rim of the eyeglass frame F, to the detector 37. For example, the detector 37 has a light-receiving plane disposed at a position substantially conjugate with the groove FA of the rim of the eyeglass frame F. For example, an optical cross section in which the groove FA of the rim of the eyeglass frame F is irradiated by the light-projecting optical system 30a and a light-receiving plane (light-receiving position) of a lens system (groove FA of the rim of the eyeglass frame F and the lens 36) including the groove FA of the rim of the eyeglass frame F and the detector 37 are disposed in a relationship of the Scheimpflug.

### <Disposition of Light-Projecting Optical System and Light-Receiving Optical System>

For example, in the present example, the light-projecting optical system 30a and the light-receiving optical system 30b are disposed, based on the Scheimpflug principle. In addition, a light-projecting and light-receiving plane formed by the light-projecting optical axis L1 of the light-projecting optical system 30a and the imaging optical axis L2 of the light-receiving optical system 30b is disposed to be tilted with respect to the cutting plane of the groove FA of the rim. Hereinafter, disposition of each optical axis will be described in detail.

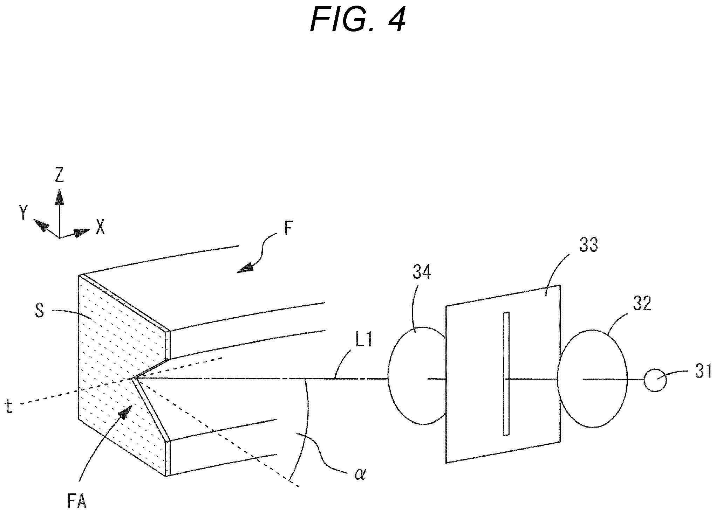

FIG. 4 is an example of the disposition of the light-projecting optical axis L1 of the light-projecting optical system 30a. For example, the light-projecting optical axis L1 of the light-projecting optical system 30a is disposed such that the groove FA of the rim is irradiated with the slit light emitted from the light source 31 in a direction perpendicular to a tangent line t of the groove FA of the rim. That is, a cutting plane S on which the groove FA of the rim is optically cut by the slit light is disposed to be orthogonal to a plane (XZ-plane) where an inscribed circle of the groove FA of the rim exists. In other words, the cutting plane S is disposed to be parallel to a depth direction (Y-direction in FIG. 4) of the groove FA of the rim.

In an example not covered by the scope of the claims, the light-projecting optical axis L1 of the light-projecting optical system 30a may be disposed horizontally with respect to the radius vector plane (that is, the XY-plane) of the groove FA of the rim. That is, the light-projecting optical axis L1 of the light-projecting optical system 30a may be disposed at a tilt angle α of 0 degrees in the vertical direction (Z-direction) with respect to the radius vector plane of the groove FA of the rim. According to the invention, the light-projecting optical axis L1 of the light-projecting optical system 30a is disposed to be tilted with respect to the radius vector plane of the groove FA of the rim. That is, the light-projecting optical axis L1 of the light-projecting optical system 30a is disposed at a predetermined tilt angle α in the vertical direction with respect to the radius vector plane of the groove FA of the rim.

In the present example, the light-projecting optical axis L1 of the light-projecting optical system 30a is disposed to be tilted (at the predetermined tilt angle α) with respect to the radius vector plane of the groove FA of the rim. In this manner, an optical path of the measurement light beam emitted by the light-projecting optical system 30a deviates from a portion on the radius vector plane of the rim. Therefore, when the irradiation position of the measurement light beam with respect to the groove FA of the rim is changed, the rim and the optical member configuring the light-projecting optical system 30a are less likely to interfere with each other, particularly in a corner portion of the rim (details thereof will be described later). In addition, the holding unit 25 can have a thinner shape, compared to a case where the light-projecting optical axis L1 of the light-projecting optical system 30a is horizontally disposed (at the tilt angle α of 0 degree). That is, the holding unit 25 has a smaller diameter in the XY-directions and has a long shape in the Z-direction. Therefore, it is possible to suppress the interference between the rim and the optical member configuring the light-projecting optical system 30a.

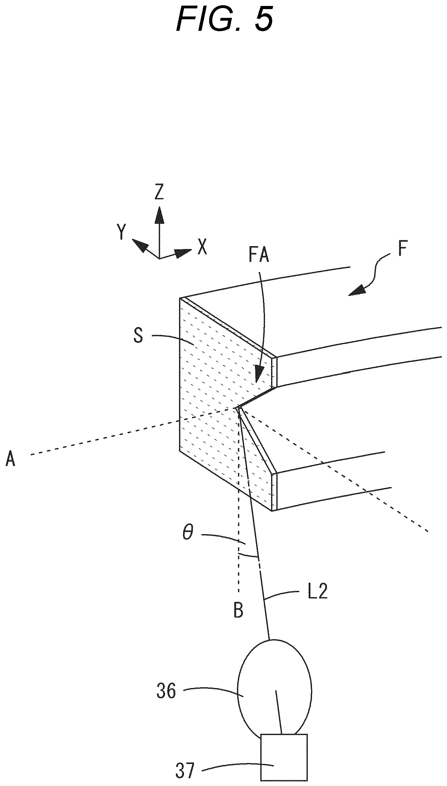

FIG. 5 is an example of the disposition of the imaging optical axis L2 of the light-receiving optical system 30b. For example, the light-receiving optical axis L2 of the light-receiving optical system 30b is not disposed on the cutting plane S of the groove FA of the rim. In other words, the imaging optical axis L2 of the light-receiving optical system 30b is not disposed on the same plane as the light-projecting optical axis L1 of the light-projecting optical system 30a.

In addition, the imaging optical axis L2 of the light-receiving optical system 30b is disposed to be tilted at a first tilt angle β (refer to FIG. 3B) in the horizontal direction (that is, the XY-plane) with respect to a perpendicular axis A perpendicular to the cutting plane S of the groove FA of the rim. That is, the light-projecting optical axis L1 of the light-projecting optical system 30a and the imaging optical axis L2 of the light-receiving optical system 30b are disposed such that an angle formed therebetween in the horizontal direction is the first tilt angle β. Furthermore, the imaging optical axis L2 of the light-receiving optical system 30b is disposed to be tilted at a second tilt angle γ (refer to FIG. 3C) in the vertical direction (that is, the YZ-plane) with respect to the perpendicular axis A perpendicular to the cutting plane S of the groove FA of the rim. That is, the light-projecting optical axis L1 of the light-projecting optical system 30a and the imaging optical axis L2 of the light-receiving optical system 30b are disposed such that the angle formed therebetween in the vertical direction is the second tilt angle γ.

It may be conceivable that the imaging optical axis L2 of the light-receiving optical system 30b is disposed at a predetermined tilt angle δ (in other words, a tilt angle δ obtained by combining the first tilt angle β and the second tilt angle γ with each other) with respect to the perpendicular axis A perpendicular to the cutting plane S of the groove FA of the rim in the horizontal direction and the vertical direction. That is, it may be conceivable that the angle formed between a vertical axis B perpendicular to the cutting plane S of the groove FA of the rim and the imaging optical axis L2 of the light-receiving optical system 30b is disposed at a tilt angle θ. For example, the tilt angle δ may be set, based on an opening angle of the groove FA of the rim (for example, an opening angle of a bevel). As an example, the tilt angle δ may be set to 55 degrees or smaller.

In the present example, in this way, the imaging optical axis L2 of the light-receiving optical system 30b is tilted at a three-dimensional angle with respect to the light-projecting optical axis L1 of the light-projecting optical system 30a, and is disposed such that the imaging optical axis L2 and the light-projecting optical axis L1 intersect each other. In this manner, the optical path of the reflected light beam of the measurement light beam emitted from the light-projecting optical system 30a deviates from a portion on the radius vector plane of the rim. Therefore, when the irradiation position of the measurement light beam with respect to the groove FA of the rim is changed, the rim and the optical member configuring the light-receiving optical system 30b receiving the reflected light beam are much less likely to interfere with each other, particularly in the corner portion of the rim (details thereof will be described later). In addition, the holding unit 25 can have a thinner shape compared to a case where the imaging optical axis L2 of the light-receiving optical system 30b is disposed to be tilted only in the horizontal direction (at the predetermined tilt angle β and the tilt angle γ of 0 degree). That is, the holding unit 25has a smaller diameter in the XY-directions and has a long shape in the Z-direction. Therefore, it is possible to suppress the interference between the rim and the optical member configuring the light-receiving optical system 30b.

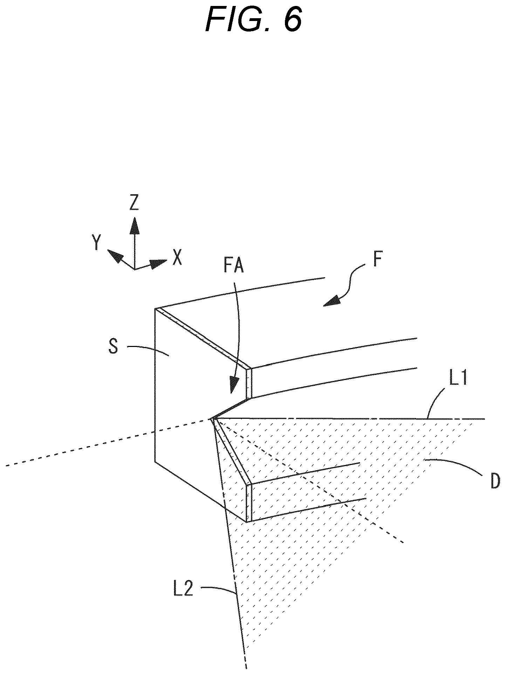

FIG. 6 is a view illustrating a disposition relationship between the light-projecting optical axis L1 of the light-projecting optical system 30a and the imaging optical axis L2 of the light-receiving optical system 30b. For example, as described above, the light-projecting optical axis L1 of the light-projecting optical system 30a is disposed at the predetermined tilt angle α in the vertical direction, the imaging optical axis L2 of the light-receiving optical system 30b is disposed at the first tilt angle β in the horizontal direction and is disposed at the second tilt angle γ in the vertical direction. In this manner, a light-projecting and light-receiving plane D formed by the light-projecting optical axis L1 of the light-projecting optical system 30a and the imaging optical axis L2 of the light-receiving optical system 30b is disposed to be tilted with respect to the cutting plane S of the groove FA of the rim.

### <Movement Unit>

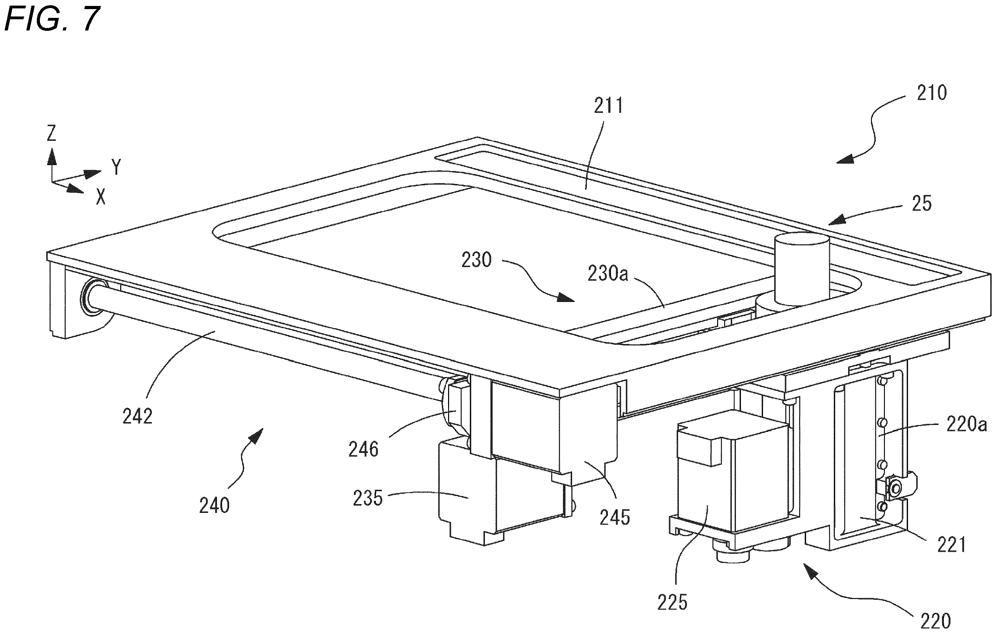

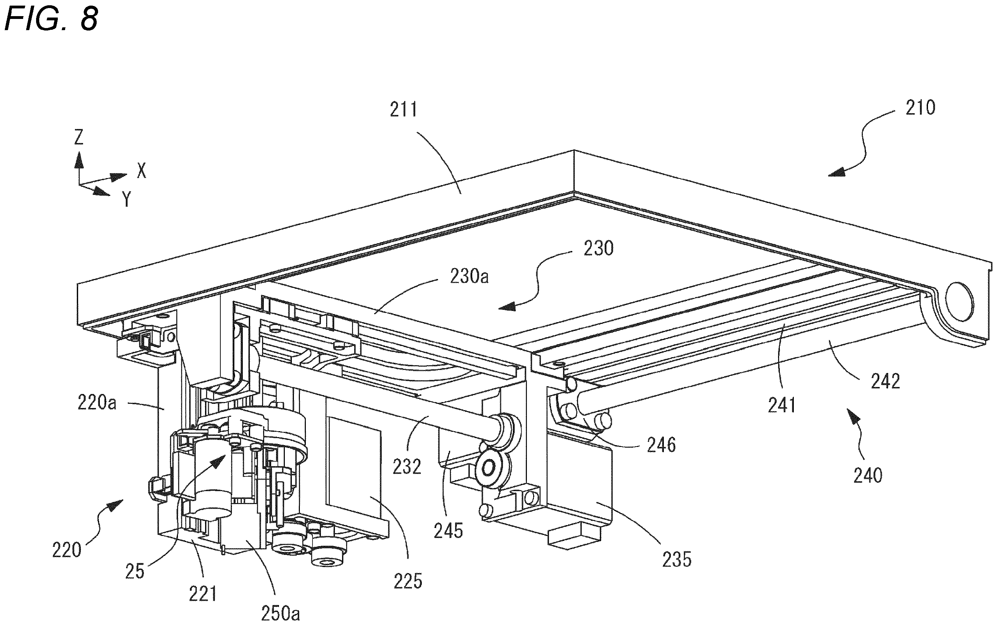

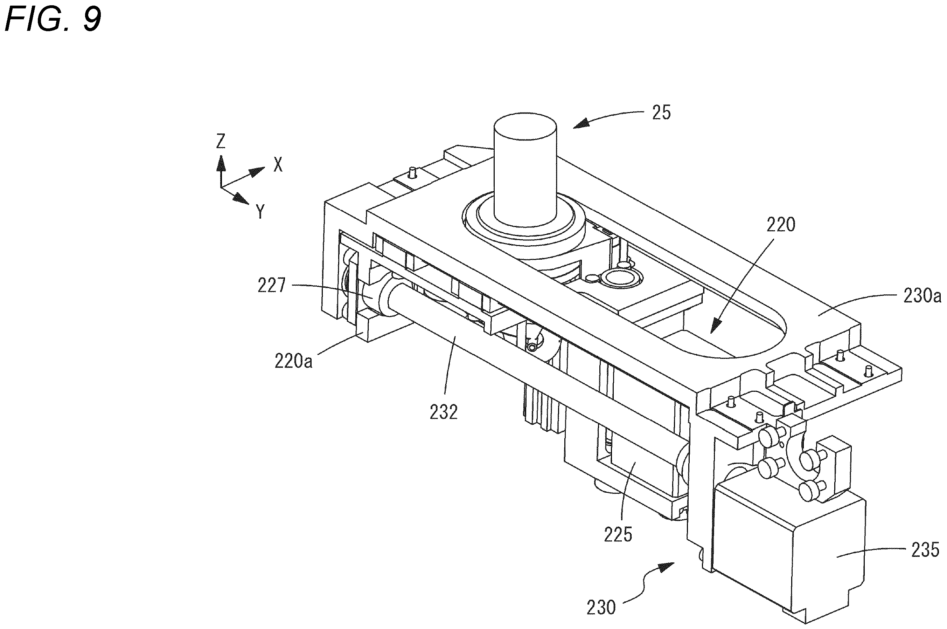

The movement unit 210 will be described. FIGS. 7 to 9 are views for describing the measurement unit 20. FIG. 7 is a top perspective view of the measurement unit 20. FIG. 8 is a bottom perspective view of the measurement unit 20. FIG. 9 is a top perspective view (perspective view illustrating a state where the base part 211 and the X-direction movement unit 240 are removed) of the Z-direction movement unit 220 and the Y-direction movement unit 230 (to be described later).

For example, the movement unit 210 includes a base part 211, a Z-direction movement unit 220, a Y-direction movement unit 230, and an X-direction movement unit 240. For example, the base part 211 is a rectangular frame that extends in the X-direction and the Y-direction, and is disposed below the frame holding unit 10. For example, the Z-direction movement unit 220 moves the holding unit 25 in the Z-direction. For example, the Y-direction movement unit 230 holds the holding unit 25 and the Z-direction movement unit 220, and moves both of these in the Y-direction. For example, the X-direction movement unit 240 holds the holding unit 25, the Z-direction movement unit 220, and the Y-direction movement unit 230, and moves all of these in the X-direction.

For example, the X-direction movement unit 240 is schematically configured as follows. For example, the X-direction movement unit 240 includes a guide rail 241 extending in the X-direction below the base part 211. For example, a Y-base 230a of the Y-direction movement unit 230 is attached to the guide rail 241 to be movable in the X-direction. For example, a motor 245 is attached to the base part 211. For example, a feed screw 242 extending in the X-direction is attached to a rotary shaft of the motor 245. For example, a nut portion 246 fixed to the Y-base 230a is screwed to the feed screw 242. In this manner, when the motor 245 is rotated, the Y-base 230a is moved in the X-direction.

For example, the Y-direction movement unit 230 is schematically configured as follows. For example, a guide rail (not illustrated) extending in the Y-direction is attached to the Y-base 230a. For example, a Z-base 220a is attached to the guide rail to be movable in the Y-direction. For example, a motor 235 for moving in the Y-direction and a rotatable feed screw 232 extending in the Y-direction are attached to the Y-base 230a. For example, a rotation of the motor 235 is transmitted to the feed screw 232 via a rotation transmission mechanism such as a gear. For example, a nut 227 attached to the Z-base 220a is screwed to the feed screw 232. In this manner, when the motor 235 is rotated, the Z-base 220a is moved in the Y-direction.

For example, the X-direction movement unit 240 and the Y-direction movement unit 230 configure an XY-direction movement unit. For example, a movement position of the holding unit 25 in the XY-directions is detected by the control unit 50 (to be described later) which detects the number of pulses for driving the motor 245 and the motor 235. For example, the movement position of the holding unit 25 in the XY-directions may be detected by using a sensor such as an encoder attached to the motors 245 and 235.

For example, the Z-direction movement unit 220 is schematically configured as follows. For example, a guide rail 221 extending in the Z-direction is formed on the Z-base 220a, and a movement base 250a to which the holding unit 25 is attached is held along the guide rail 221 to be movable in the Z-direction. For example, a pulse motor 225 for moving in the Z-direction is attached to the Z-base 220a, and a feed screw (not illustrated) extending in the Z-direction is attached to be rotatable. For example, the feed screw is screwed to a nut attached to the base 250a of the holding unit 25. For example, the rotation of the motor 225 is transmitted to the feed screw 222 via a rotation transmission mechanism such as a gear, and a rotation of the feed screw 222 causes the holding unit 25 to move in the Z-direction.

For example, the movement position of the holding unit 25 in the Z-direction is detected by the control unit 50 (to be described later) which detects the number of pulses for driving the motor 225. For example, the movement position of the holding unit 25 in the Z-direction may be detected by using a sensor such as an encoder attached to the motor 225.

The respective movement mechanisms in the X-direction, the Y-direction, and the Z-direction as described above are not limited to the present example, and a well-known mechanism can be adopted. For example, instead of linearly moving the holding unit 25, a configuration may be adopted such that the holding unit 25 is moved by arc actuation around the center of the rotation base (for example, refer to JP-A-2006-350264).

### <Rotation Unit>

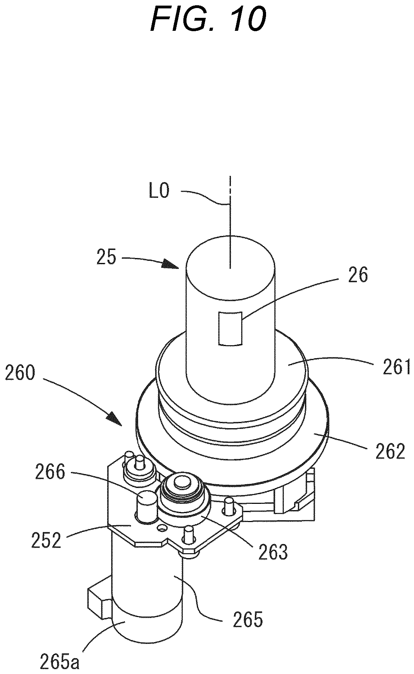

The rotation unit 260 will be described. FIG. 10 is a schematic view of the rotation unit 260.

For example, the rotation unit 260 rotates the holding unit 25 around a rotation axis L0extending in the Z-direction, thereby changing the XY-direction in which the opening portion 26 faces. For example, the rotation unit 260 includes a rotation base 261. For example, the holding unit 25 is attached to the rotation base 261. For example, the rotation base 261 is held to be rotatable around the rotation axis L0 extending in the Z-direction. For example, a large diameter gear 262 is formed on an outer periphery of a lower portion of the rotation base 261. For example, the rotation unit 260 has an attachment plate 252. For example, the motor 265 is attached to the attachment plate 252. For example, a pinion gear 266 is fixed to a rotary shaft of the motor 265, and a rotation of the pinion gear 266 is transmitted to the large diameter gear 262 via a gear 263 provided to be rotatable in the attachment plate 252. Therefore, a rotation of the motor 265 causes the rotation base 261 to rotate around the rotation axis L0. For example, the rotation of the motor 265 is detected by an encoder 265a integrally attached to the motor 265, and a rotation angle of the rotation base 261 is detected from an output of the encoder 265a. An origin position of a rotation of the rotation base 261 is detected by an origin position sensor (not illustrated). The respective movement mechanisms of the rotation unit 260 as described above are not limited to the present example, and a well-known mechanism can be adopted.

In the present example, the rotation axis L0 of the rotation unit 260 is set as an axis that passes through the light source 31 of the light-projecting optical system 30a. That is, the rotation unit 260 rotates around the light source 31 of the light-projecting optical system 30a. As a matter of course, the rotation axis L0 of the rotation unit 260 may be the rotation axis located at a different position. For example, the rotation axis L0 of the rotation unit 260 may be set as an axis that passes through the detector 37 of the light-receiving optical system 30b.

### <Control Unit>

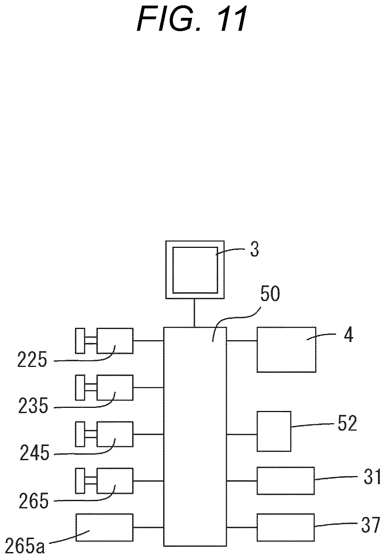

FIG. 11 is a view illustrating a control system of the measurement apparatus 1. For example, the monitor 3, the switch unit 4, the light source 31, the detector 37, the encoder 265a, each motor, and a non-volatile memory 52 (hereinafter, a memory 52) are electrically connected to the control unit 50.

For example, the control unit 50 includes a CPU (processor), a RAM, and a ROM. For example, the CPU controls each member in the measurement apparatus 1. In addition, for example, the CPU functions as a calculation unit that performs various calculation processes such as calculation of the cross-sectional shape of the groove FA of the rim, based on an output signal from each sensor. For example, the RAM temporarily stores various information. For example, the ROM stores various programs for controlling the operation of the measurement apparatus 1, or initial values. The control unit 50 may be configured to include a plurality of control units (that is, a plurality of processors).

For example, the memory 75 is a non-transitory storage medium that can hold stored contents even when power supply is cut off. For example, a hard disk drive, a flash ROM, or a USB memory can be used as the memory 75.

### <Control Operation>

A control operation of the measurement apparatus 1 will be described.

An operator widens a gap between the first slider 102 and the second slider 103, and clamps the upper and lower sides of the rim of the eyeglass frame F by using a clamp pin, thereby causing the frame holding unit 10 to hold the frame.

Subsequently, the operator operates the switch unit 4 to start measurement of the groove FA of the rim. In the present example, the groove FA in a left rim FL is first measured, and thereafter, the groove FA in a right rim FR is measured. As a matter of course, the right rim FR may be first measured, and thereafter, the left rim FL may be measured.

### < Measurement of Rim and Acquisition of Captured Image>

For example, based on a measurement start signal, the control unit 50 controls driving of at least one of the X-direction movement unit 240, the Y-direction movement unit 230, the Z-direction movement unit 220, and the rotation unit 260 so that the holding unit 25 is moved from a retracted position to a measurement start position. For example, in the present example, a position in the X-direction at the measurement start position is set to a center position between the clamp pins 130a and 130b on the lower end side of the right rim FR and clamp pins 131a and 131b on the upper end side of the right rim FR. In addition, for example, in the present example, a position in the Y-direction at the measurement start position is set to a position of the center line CL. As a matter of course, the measurement start position may be set to any desired position.

In addition, for example, when the holding unit 25 is moved to the measurement start position, the control unit 50 turns on the light source 31. In order to irradiate a predetermined position of the groove FA of the rim of the eyeglass frame F with the measurement light beam, the control unit 50 controls at least one driving of the movement unit 210 and the rotation unit 260 to move the holding unit 25.

For example, in the present example, the control unit 50 moves the holding unit 25 along a contour of the rim of the eyeglass frame F. In other words, the control unit 50 moves the eyeglass frame measurement optical system 30 to have a constant positional relationship with the groove of the rim of the eyeglass frame F. That is, the control unit 50 moves the light-projecting optical system 30a and the light-receiving optical system 30b with respect to the eyeglass frame F in a state of maintaining a relationship of the Scheimpflug. In this manner, a captured image of the rim of the eyeglass frame F is acquired.

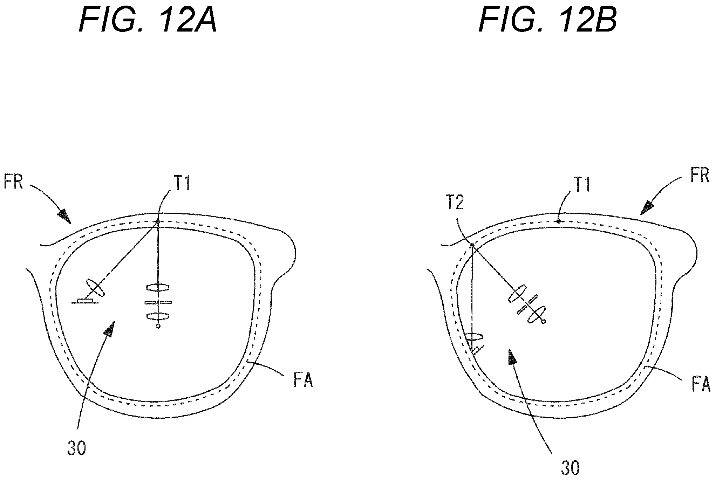

Hereinafter, acquisition of the captured image of the rim will be described in detail. FIG. 12 A and FIG. 12B are views for describing an acquisition position of the captured image of the rim. FIG. 12A and FIG. 12B are top views of the rim, and represent acquisition positions of the captured image at mutually different radius vector angles. The holding unit 25 is omitted in the illustration in FIG. 12A and FIG. 12B.

For example, the control unit 50 sets an acquisition position for acquiring a captured image 40 of the rim. For example, the control unit 50 controls the rotation unit 260 to rotate the light-projecting optical axis L1 of the light-projecting optical system 30a on the XY-plane, and moves the light-projecting optical axis L1 of the light-projecting optical system 30a in the circumferential direction of the rim. In addition, for example, the control unit 50 controls the movement unit 210 (at least one of the X-direction movement unit 240, the Y-direction movement unit 230, and the Z-direction movement unit 220). The control unit 50 changes the irradiation position of the measurement light beam such that the groove FA of the rim is irradiated with the measurement light beam. In this manner, a radius vector angle for acquiring the captured image 40 of the rim is changed, and an irradiation position T1 of the measurement light beam emitted by the light-projecting optical system 30a is changed to an irradiation position T2 of the measurement light beam emitted by the light-projecting optical system 30a.

For example, the light source 31 of the light-projecting optical system 30a is turned on. In this manner, the groove FA of the rim of the eyeglass frame F is optically cut by the slit light. In addition, for example, the reflected light beam reflected on the groove FA of the rim of the eyeglass frame F is directed to the light-receiving optical system 30b, and is received by the detector 37. The control unit 50 can acquire the captured image 40 of the rim, based on the reflected light beam received by the detector 37.

For example, when the control unit 50 acquires the captured image 40 of the rim at the measurement start position, the control unit 50 controls the rotation unit 260. While changing the radius vector angle around the rotation axis L0, the acquisition position for acquiring the captured image 40 of the rim is moved in the circumferential direction of the rim. In this manner, the captured images 40 of the rim at each radius vector angle are sequentially acquired.

### <Whether to Satisfactorily Acquire Captured Image by Disposition of Light-Projecting Optical System and Light-Receiving Optical System>

Here, in the present example, in order to move the holding unit 25 inside the rim of the eyeglass frame F in the circumferential direction of the rim, the light-projecting optical system 30a and the light-receiving optical system 30b have a predetermined disposition relationship. Therefore, the interference between the rim and each optical system can be suppressed, and the captured image 40 of the rim can be satisfactorily acquired. Hereinafter, this configuration will be described.

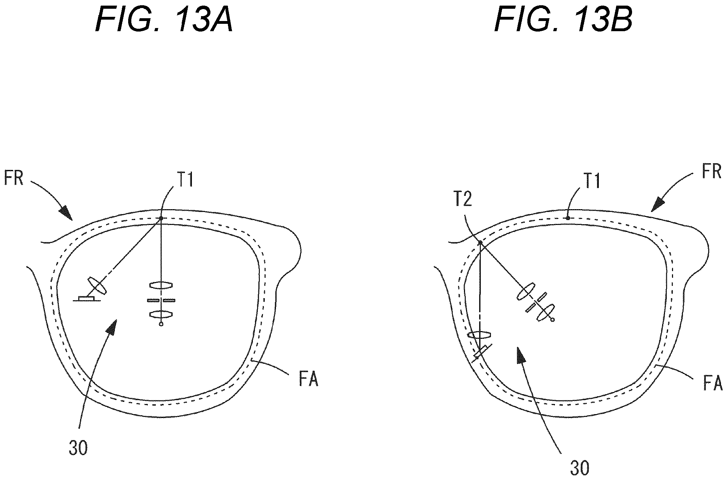

FIG. 12A and FIG. 12B described above illustrate a state as follows. The light-projecting optical axis L1 of the light-projecting optical system 30a is disposed at the predetermined tilt angle α in the vertical direction, and the imaging optical axis Lb of the light-receiving optical system 30b is disposed at the predetermined tilt angle β in the horizontal direction and at the predetermined tilt angle γ in the vertical direction. FIG. 13A and FIG. 13B illustrate states as follows. The light-projecting optical axis L1 of the light-projecting optical system 30a is disposed at the predetermined tilt angle α in the vertical direction, and the imaging optical axis Lb of the light-receiving optical system 30b is disposed at the predetermined tilt angle β in the horizontal direction and at the tilt angle γ of 0 degrees in the vertical direction (that is, a state where the imaging optical axis Lb of the light-receiving optical system 30b is not tilted in the vertical direction). In FIG. 13A and FIG. 13B, the holding unit 25 is also omitted in the illustration. FIGS. 12(a) and 12(b), and FIGS. 13(a) and 13(b) are top views of the rim, and respectively represent the acquisition positions of the cross-sectional shape at different radius vector angles (irradiation positions of the measurement light beam).

For example, in order to acquire the captured image 40 of the rim, it is necessary that the imaging optical axis Lb of the light-receiving optical system 30b is not disposed on the cutting plane S with respect to the cutting plane S of the rim by the light-projecting optical system 30a. Therefore, in the present example, as illustrated in FIG. 12A and FIG. 12B, a configuration is adopted as follows. The imaging optical axis Lb of the light-receiving optical system 30b is disposed to be tilted at the predetermined first tilt angle β in the horizontal direction, and at the predetermined second tilt angle γ in the vertical direction.

In this case, for example, as illustrated in FIG. 12A, when the upper end portion, the lower end portion, the right end portion, and the left end portion of the rim are irradiated with the measurement light beam, the rim and the light-receiving optical system 30b do not interfere with each other. In addition, for example, as illustrated in FIG. 12B, even when the corner portion of the rim is irradiated with the measurement light beam, the rim and the light-receiving optical system 30b are less likely to interfere with each other. That is, the light-receiving optical system 30b deviates from a portion on the radius vector plane (on the XY-plane) of the rim, and the light-receiving optical system 30 is disposed on the lower surface of the rim. Therefore, interference between the rim and the light-receiving optical system 30b can be avoided, and the captured image 40 can be satisfactorily acquired.

However, as illustrated in FIG. 13A and FIG. 13B, in a configuration in which the imaging optical axis Lb of the light-receiving optical system 30b is tilted at the predetermined first tilt angle β in the horizontal direction but is not tilted in the vertical direction, it is difficult to avoid the interference between the rim and the light-receiving optical system 30b.

For example, as illustrated in FIG. 13A, when the upper end portion, the lower end portion, the right end portion, and the left end portion of the rim are irradiated with the measurement light beam, the rim and the light-receiving optical system 30b do not interfere with each other. On the other hand, for example, as illustrated in FIG. 13B, when the corner portion of the rim is irradiated with the measurement light beam, the rim and the light-receiving optical system 30b are likely to interfere with each other. That is, the light-receiving optical system 30b is disposed on the radius vector plane (on the XY-plane) of the rim. Therefore, the interference between the rim and the light-receiving optical system 30b cannot be avoided, and the captured image 40 of the rim cannot be satisfactorily acquired.

For example, in the present example, in order to solve the above-described problem, the imaging optical axis Lb of the light-receiving optical system 30b is tilted in the horizontal direction and the vertical direction.

### <Acquisition of Cross-Sectional Shape of Groove of Rim>

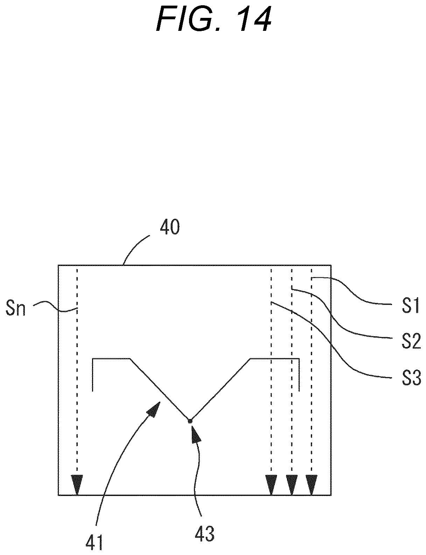

FIG. 14 is an example of the captured image 40 of the rim. For example, the control unit 50 analyzes the acquired captured image 40, and detects the cross-sectional shape 41 of the groove FA of the rim. For example, the control unit 50 detects luminance values in the order of a scan line S1, a scan line S2, a scan line S3,..., and a scan line Sn for the captured image 40, and obtains a luminance distribution. For example, the detector 37 detects the reflected light beam. Accordingly, in a case where the cross-sectional shape 41 exists on the captured image 40, the luminance value increases. For example, the control unit 50 detects a change in the luminance value of the captured image 40 in this way. Accordingly, the control unit 50 can extract the cross-sectional shape 41 of the groove FA of the rim from the captured image 40.

For example, the control unit 50 may control the movement unit 210 such that the cross-sectional shape 41 is detected when the cross-sectional shape 41 cannot be detected on the captured image 40. In addition, for example, the control unit 50 may control the movement unit 210 such that the cross-sectional shape 41 is displayed at a predetermined position on the captured image 40. That is, the control unit 50 may control the movement of the movement unit 210, and may change a position of the cross-sectional shape 41 on the captured image 40 by changing the light-receiving position of the reflected light beam of the groove FA of the rim on the detector 37.

For example, the control unit 50 uses at least one of the number of pulses of the motor 225, the number of pulses of the motor 235, the number of pulses of the motor 245, and a detection result of the encoder 265a, calculates the acquisition position of the captured image 40 (acquisition position of the cross-sectional shape 41 of the groove FA of the rim), and causes the memory 52 to store the calculated acquisition position. In addition, for example, the control unit 50 causes the memory 52 to store the cross-sectional shape 41 of the groove FA of the rim at the acquisition position of the captured image 40. In this manner, a two-dimensional cross-sectional shape of the groove FA of the rim is acquired.

### <Correction of Cross-Sectional Shape of Groove of Rim>

For example, in some cases, the cross-sectional shape 41 of the groove FA of the rim may be distorted, since the imaging optical axis Lb of the light-receiving optical system 30b is tilted with respect to the light-projecting optical axis L1 of the light-projecting optical system 30a. Therefore, the control unit 50 may correct a distortion in the cross-sectional shape 41 of the groove FA of the rim. For example, in the present example, the control unit 50 corrects the cross-sectional shape 41 of the groove FA of the rim, based on the predetermined tilt angle β in the horizontal direction and the predetermined tilt angle γ in the vertical direction in the imaging optical axis L2 of the light-receiving optical system 30b.

For example, the control unit 50 corrects the distortion in the horizontal direction in the cross-sectional shape 41 of the groove FA of the rim by using the trigonometric function using the tilt angle β at which the imaging optical axis Lb of the light-receiving optical system 30b is tilted in the horizontal direction. Furthermore, for example, the control unit 50 corrects the distortion in the vertical direction in the cross-sectional shape 41 of the groove FA of the rim by using the trigonometric function using the tilt angle γ at which the imaging optical axis Lb of the light-receiving optical system 30b is tilted in the vertical direction. In this manner, the distortion of the cross-sectional shape 41 of the groove FA of the rim is corrected, and the cross-sectional shape 41 which is proper when viewed in a direction perpendicular to the cutting plane S of the groove FA of the rim is acquired.

As a matter of course, for example, in the present example, the control unit 50 may correct the cross-sectional shape 41 of the groove FA of the rim, based on the tilt angles δ in the horizontal direction and the vertical direction in the imaging optical axis L2 of the light-receiving optical system 30b. In this case, for example, the control unit 50 may correct the distortion in the cross-sectional shape 41 of the groove FA of the rim by using the trigonometric function using the tilt angle δ at which the imaging optical axis Lb of the light-receiving optical system 30b is tilted in the horizontal direction and the vertical direction.

### <Interpolation of Cross-Sectional Shape of Groove of Rim>

For example, in some cases, the cross-sectional shape 41 of the groove FA of the rim may be partially defective. Therefore, the control unit 50 may interpolate a defective portion in the cross-sectional shape 41 of the groove FA of the rim. For example, in the present example, the control unit 50 detects a lowest position where the luminance value is detected, as a bottom 43 of the groove FA of the rim, from the luminance distribution of the captured image 40 of the rim. In addition, for example, the control unit 50 sets the cross-sectional shape 41 of the groove FA of the rim to be a bilaterally symmetrical shape in a depth direction of the groove FA of the rim, based on the bottom 43 of the groove FA of the rim. In this manner, the control unit 50 interpolates the defective portion.

As a matter of course, for example, the control unit 50 may interpolate the defective portion, based on a light-receiving result of the reflected light beam at a position (for example, an adjacent position) around the defective portion in the cross-sectional shape 41 of the groove FA of the rim. In addition, for example, the control unit 50 may interpolate the defective portion by approximating the cross-sectional shape 41 of the rim.

In the present example, a configuration, in which the defective portion in the cross-sectional shape 41 of the groove FA of the rim is interpolated after the distortion in the cross-sectional shape 41 of the groove FA of the rim is corrected, has been described as an example. However, the present disclosure is not limited thereto. For example, a configuration may be adopted such that the distortion in the cross-sectional shape 41 of the groove FA of the rim is corrected after the defective portion in the cross-sectional shape 41 of the groove FA of the rim is interpolated.

### <Analysis of Cross-Sectional Shape of Groove of Rim>

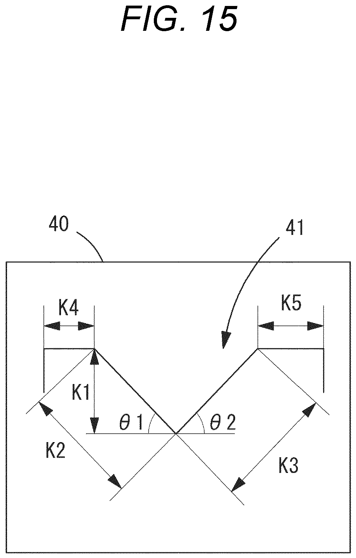

FIG. 15 is a view for describing a parameter acquired from the cross-sectional shape 41 of the groove FA of the rim. For example, the control unit 50 acquires various parameters relating to the groove FA of the rim by performing an analyzing process on the cross-sectional shape 41 of the groove FA of the rim. For example, the control unit 50 may acquire the parameter of the groove FA of the rim by acquiring the luminance distribution in the cross-sectional shape 41 of the groove FA of the rim. For example, as the parameter of the groove FA of the rim, the control unit 50 can acquire a distance K1 to the bottom of the groove FA of the rim, right and left slope angles θ1 and θ2 of the groove FA of the rim, right and left slope lengths K2 and K3 of the groove FA of the rim, and right and left rim shoulder lengths K4 and K5.

For example, the control unit 50 acquires the captured image 40 of the rim over the entire circumference of the rim by repeating the above-described control over the entire circumference of the rim. Based on the captured image 40 of the rim, the control unit 50 can acquire the cross-sectional shape 41 of the groove FA of the rim over the entire circumference of the rim. For example, the control unit 50 calls the cross-sectional shape 41 and the acquisition position of the groove FA of the rim over the entire circumference of the rim, which are sequentially stored in the memory 52, and performs a calculation process. In this manner, the control unit 50 can acquire a three-dimensional cross-sectional shape of the groove FA of the rim. In addition, for example, the control unit 50 causes the memory 52 to store the acquired three-dimensional cross-sectional shape of the groove FA of the rim.

### <Acquisition of Shape of Eyeglass Frame>

For example, the control unit 50 can acquire a shape of the rim of the eyeglass frame F from the three-dimensional cross-sectional shape of the groove FA of the rim. For example, the control unit 50 detects the bottom 43 of the groove FA of the rim at a plurality of radius vector angles from the cross-sectional shape 41 of the groove FA of the rim at a plurality of radius vector angles, and acquires the shape of the rim of the eyeglass frame, based on a detection result. For example, the control unit 50 acquires position information on the bottom 43 of the groove FA of the rim, based on a position of the bottom 43 of the groove FA of the rim which is acquired at every radius vector angle and an acquisition position where the cross-sectional shape 41 of the groove FA of the rim is acquired. For example, in this manner, the control unit 50 may acquire three-dimensional shapes (rn, zn, and θn) (n=1, 2, 3,..., N) of the rim of the eyeglass frame F.

For example, the control unit 50 starts measurement of the left rim FR after the right rim FR is completely measured. For example, the control unit 50 controls at least one driving of the X-direction movement unit 240, the Y-direction movement unit 230, the Z-direction movement unit 220, and the rotation unit 260, and moves the holding unit 25 to the measurement start position of the left rim FL. In addition, for example, the control unit 50 similarly acquires the cross-sectional shape 41 of the groove FA of the left rim FR and the shape of the left rim FR of the eyeglass frame F.

The cross-sectional shape (at least one of the two-dimensional cross-sectional shape and the three-dimensional cross-sectional shape) of the groove FA of the rim, and the shape of the rim of the eyeglass frame F which are acquired by using the measurement apparatus 1 may be transmitted to a spectacle lens processing apparatus for processing a spectacle lens to be put into the rim of the eyeglass frame F. A control unit of the spectacle lens processing apparatus may receive the information, and may process a peripheral edge of the spectacle lens, based on the information.

As described above, for example, in the eyeglass frame shape measurement apparatus according to the present example, the light-projecting and light-receiving plane formed by the light-projecting optical axis of the light-projecting optical system and the light-receiving optical axis of the light-receiving optical system is disposed to be tilted with respect to the cutting plane where the groove of the rim is cut by the measurement light beam. In other words, the light-receiving optical axis of the light-receiving optical system is not disposed on the cutting plane where the groove of the rim is cut by the measurement light beam, and is disposed to be tilted at the first tilt angle in the horizontal direction with respect to the axis perpendicular to the cutting plane, and to be tilted at the second tilt angle in the vertical direction. In this manner, even in a configuration in which the light-projecting optical system and the light-receiving optical system are disposed inside in the radius vector direction with respect to the groove of the rim, the light-projecting optical system and the light-receiving optical system can be more freely moved inside the rim (in other words, a movement range can be set to be wider). Therefore, in particular, even in the corner portion of the rim, the rim and the optical system are less likely to interfere with each other, and the cross-sectional shape of the groove of the rim can be satisfactorily acquired.

In addition, for example, the eyeglass frame shape measurement apparatus according to the present example, the light-projecting optical system and the light-receiving optical system are integrally held by the holding unit, and the holding unit is moved inside the rim of the eyeglass frame, thereby changing the measurement position with respect to the groove of the rim of the eyeglass frame. Therefore, the positional relationship between the light-projecting optical system and the light-receiving optical system (for example, the disposition of the light-projecting optical system and the light-receiving optical system based on the relationship of the Scheimpflug) is always constant, and the cross-sectional shape of the groove of the rim is can be acquired with a simple configuration.

In addition, for example, in the eyeglass frame shape measurement apparatus according to the present example, the light-projecting optical axis of the light-projecting optical system is disposed such that the groove of the rim is irradiated with the measurement light beam in the direction perpendicular to the tangent line of the groove of the rim. In this manner, the cross-sectional shape of the groove of the rim can be accurately acquired.

In addition, for example, in the eyeglass frame shape measurement apparatus according to the present example, the light-projecting optical axis of the light-projecting optical system is disposed to be tilted with respect to the radius vector plane of the groove of the rim such that the groove of the rim is irradiated with the measurement light beam in the direction perpendicular to the tangent line of the groove of the rim. For example, in this manner, the light-projecting optical axis of the light-projecting optical system and the light-receiving optical axis of the light-receiving optical system can be respectively tilted in the direction perpendicular to the radius vector direction of the rim of the eyeglass frame (that is, in the vertical direction). Therefore, the holding unit can be designed to have the further reduced space. The rim and the optical system can be less likely to interfere with each other even in the corner portion of the rim, and the cross-sectional shape of the groove of the rim can be satisfactorily acquired.

In addition, for example, the eyeglass frame shape measurement apparatus according to the present example corrects the cross-sectional shape of the groove of the rim, based on the first tilt angle and the second tilt angle in the light-receiving optical axis of the light-receiving optical system. For example, in a case where at least the light-receiving optical axis of the light-receiving optical system is tilted in the horizontal direction and the vertical direction, the holding unit can be designed to have the reduced space, and can be more freely moved. On the other hand, the cross-sectional shape of the groove of the rim is distorted. Therefore, the cross-sectional shape of the groove of the rim can be accurately acquired by correcting the cross-sectional shape of the groove of the rim, based on the first tilt angle and the second tilt angle of the light-receiving optical axis of the light-receiving optical system.

### <Modification Example>

In the present example, a configuration, in which the light-projecting optical axis L1 of the light-projecting optical system 30a is disposed such that the groove FA of the rim is irradiated with the measurement light beam in the direction perpendicular to the tangent line t of the groove FA of the rim, has been described as an example. However, the present disclosure is not limited thereto. For example, a configuration may be adopted in which the light-projecting optical axis L1 of the light-projecting optical system 30a is disposed such that the groove FA of the rim is irradiated with the measurement light beam in the oblique direction with respect to the tangent line t of the groove FA of the rim. As an example, a configuration may be adopted in which the light-projecting optical axis L1 of the light-projecting optical system 30a is disposed such that the groove FA of the rim is irradiated with the measurement light beam tilted in the horizontal direction (XY-direction) with respect to the tangent line t of the groove FA of the rim.

In this case, the cutting plane S in which the groove FA of the rim is optically cut by the slit light is located obliquely with respect to the plane (XZ-plane) inscribed in the groove FA of the rim. The control unit 50 may correct the captured image 40 of the rim, based on the tilt angle at which the light-projecting optical axis L1 of the light-projecting optical system 30a is tilted in the horizontal direction, and may acquire the cross-sectional shape 41 of the groove FA of the rim when the cutting plane S is located perpendicular to the plane inscribed in the groove FA of the rim.

In the present example, a configuration in which the light-projecting optical axis L1 of the light-projecting optical system 30a is disposed to be tilted at the predetermined tilt angle α in the vertical direction has been described as an example. However, the present disclosure is not limited thereto. For example, the light-projecting optical axis L1 of the light-projecting optical system 30a may be disposed at the tilt angle α of 0 degrees in the vertical direction. That is, the light-projecting optical axis L1 of the light-projecting optical system 30a may be disposed horizontally (on the XY-plane) without being tilted in the vertical direction.

However, compared to a configuration in which the light-projecting optical axis L1 of the light-projecting optical system 30a is tilted in the vertical direction, a size of the holding unit 25 increases according to a configuration in which the light-projecting optical axis L1 of the light-projecting optical system 30a is not tilted in the vertical direction. Therefore, the holding unit 25 is less likely to freely move inside the rim, and the rim and the holding unit 25 are likely to interfere with each other particularly in the corner portion of the rim. Therefore, it is preferable that the light-projecting optical axis L1 of the light-projecting optical system 30a is disposed to be tilted in the vertical direction.

In the present example, a configuration, in which the light-projecting optical axis L1 of the light-projecting optical system 30a is disposed on the upper side in the vertical direction, and the imaging optical axis L2 of the light-receiving optical system 30b is disposed on the lower side in the vertical direction, has been described as an example. However, the present disclosure is not limited thereto. In the present example, any configuration may be adopted as long as the light-projecting optical axis L1 of the light-projecting optical system 30a and the imaging optical axis L2 of the light-receiving optical system 30b are disposed in the Scheimpflug relationship, and are disposed such that the interference between the rim and the optical system (in other words, the holding unit 25) can be avoided. As an example, a configuration may be adopted in which the light-projecting optical axis L1 of the light-projecting optical system 30a is disposed on the lower side in the vertical direction, and the imaging optical axis L2 of the light-receiving optical system 30b is disposed on the upper side in the vertical direction. In addition, as an example, a configuration may be adopted in which both the light-projecting optical axis L1 of the light-projecting optical system 30a and the imaging optical axis L2 of the light-receiving optical system 30b are disposed on the upper side in the vertical direction. In addition, as an example, a configuration may be adopted in which both the light-projecting optical axis L1 of the light-projecting optical system 30a and the imaging optical axis L2 of the light-receiving optical system 30b are disposed on the lower side in the vertical direction.

In the present example, a configuration in which the imaging optical axis L2 of the light-receiving optical system 30b is disposed on the left side in the horizontal direction has been described as an example. However, the present disclosure is not limited thereto. In the present example, as described above, any configuration may be adopted as long as the light-projecting optical axis L1 of the light-projecting optical system 30a and the imaging optical axis L2 of the light-receiving optical system 30b are disposed in the Scheimpflug relationship, and are disposed such that the interference between the rim and the optical system (in other words, the holding unit 25) can be avoided. As an example, a configuration may be adopted in which the imaging optical axis L2 of the light-receiving optical system 30b is disposed on the right side in the horizontal direction.

1: eyeglass frame shape measurement apparatus
3: monitor
4: switch unit
10: frame holding unit
20: measurement unit
25: holding unit
30a: light-projecting optical system
30b: light-receiving optical system
50: control unit
52: memory
220: Z-direction movement unit
230: Y-direction movement unit
240: X-direction movement unit
260: rotation unit

## Claims

1. An eyeglass frame shape measurement apparatus (1) for measuring a shape of an eyeglass frame (F), comprising:
a light-projecting optical system (30a) configured to irradiate a groove (FA) of a rim of the eyeglass frame (F) with a measurement light beam emitted from a light source (31); and
a light-receiving optical system (30b) configured to receive a reflected light beam of the measurement light beam reflected on the groove (FA) of the rim of the eyeglass frame (F) by a detector (37),
wherein the light-projecting optical system (30a) and the light-receiving optical system (30b) are configured to be disposed inside the groove (FA) of the rim of the eyeglass frame (F) in a radius vector direction,
wherein a light-projecting and light-receiving plane (D) formed by a light-projecting optical axis (L1) of the light-projecting optical system (30a) and a light-receiving optical axis (L2) of the light-receiving optical system (30b) are configured to be disposed so as to be tilted with respect to a cutting plane (S) parallel or oblique to a depth direction of the groove (FA) where the groove (FA) of the rim is cut by the measurement light beam,
wherein the light source (31) is configured to irradiate the groove (FA) of the rim from an inside of the rim with the measurement light beam, and the detector (37) is configured to detect the reflected light beam inside the rim to acquire a cross-sectional shape of the groove (FA) of the rim, **characterised in that**
the light-projecting optical axis (L1) of the light-projecting optical system (30a) is configured to be disposed so as to be tilted with respect to a radius vector plane of the groove (FA) of the rim.

2. The eyeglass frame shape measurement apparatus (1) according to claim 1, further comprising:
a holding unit (25) holding the light-projecting optical system (30a) and the light-receiving optical system (30b);
changing means (210, 260) for moving the holding unit (25) with respect to the eyeglass frame (F); and
changing control means (50) for controlling the changing means (210, 260),
wherein the changing control means moves the holding unit (25) inside the rim of the eyeglass frame (F) to change a measurement position with respect to the groove (FA) of the rim of the eyeglass frame (F).

3. The eyeglass frame shape measurement apparatus (1) according to claim 1 or 2,
wherein the light-projecting optical axis (L1) of the light-projecting optical system (30a) is disposed such that the groove (FA) of the rim is irradiated with the measurement light beam from a direction perpendicular to a tangent line (T) of the groove (FA) of the rim.

4. The eyeglass frame shape measurement apparatus (1) to any one of claims 1 to 3, further comprising:
correction means for correcting the cross-sectional shape of the groove (FA) of the rim, based on a first tilt angle (β) in a horizontal direction with respect to a perpendicular axis (A) perpendicular to the cutting plane (S) and a second tilt angle (γ) in a vertical direction with respect to the perpendicular axis (A) perpendicular to the cutting plane (S) on the light-receiving optical axis (L2) of the light-receiving optical system (30b) .

## Patentansprüche

1. Brillenfassungsformmessvorrichtung (1) zum Messen einer Form einer Brillenfassung (F), umfassend:
ein lichtprojizierendes optisches System (30a), das konfiguriert ist, um eine Nut (FA) eines Rands der Brillenfassung (F) mit einem Messlichtstrahl zu bestrahlen, der von einer Lichtquelle (31) emittiert wird; und
ein lichtempfangendes optisches System (30b), das konfiguriert ist, um einen reflektierten Lichtstrahl des Messlichtstrahls zu empfangen, der auf der Nut (FA) des Rands der Brillenfassung (F) durch einen Detektor (37) reflektiert wird,
wobei das lichtprojizierende optische System (30a) und das lichtempfangende optische System (30b) konfiguriert sind, um innerhalb der Nut (FA) des Rands der Brillenfassung (F) in einer Radiusvektorrichtung angeordnet zu sein,
wobei eine lichtprojizierende und lichtempfangende Ebene (D), die durch eine lichtprojizierende optische Achse (L1) des lichtprojizierenden optischen Systems (30a) und eine lichtempfangende optische Achse (L2) des lichtempfangenden optischen Systems (30b) gebildet werden, konfiguriert sind, um so angeordnet zu sein, dass sie in Bezug auf eine Schnittebene (S) parallel oder schräg zu einer Tiefenrichtung der Nut (FA) geneigt sind, wo die Nut (FA) des Rands durch den Messlichtstrahl geschnitten wird,
wobei die Lichtquelle (31) konfiguriert ist, um die Nut (FA) des Rands von einer Innenseite des Rands mit dem Messlichtstrahl zu bestrahlen, und der Detektor (37) konfiguriert ist, um den reflektierten Lichtstrahl innerhalb des Rands zu erfassen, um eine Querschnittsform der Nut (FA) des Rands zu erfassen, **dadurch gekennzeichnet, dass**
die lichtprojizierende optische Achse (L1) des lichtprojizierenden optischen Systems (30a) konfiguriert ist, um so angeordnet zu sein, dass sie in Bezug auf eine Radiusvektorebene der Nut (FA) des Rands geneigt ist.

2. Brillenfassungsformmessvorrichtung (1) nach Anspruch 1, ferner umfassend:
eine Halteeinheit (25), die das lichtprojizierende optische System (30a) und das lichtempfangende optische System (30b) hält;
Änderungsmittel (210, 260) zum Bewegen der Halteeinheit (25) in Bezug auf die Brillenfassung (F); und
Änderungssteuermittel (50) zum Steuern der Änderungsmittel (210, 260),
wobei die Änderungssteuermittel die Halteeinheit (25) innerhalb des Rands der Brillenfassung (F) bewegen, um eine Messposition in Bezug auf die Nut (FA) des Rands der Brillenfassung (F) zu ändern.

3. Brillenfassungsformmessvorrichtung (1) nach Anspruch 1 oder 2,
wobei die lichtprojizierende optische Achse (L1) des lichtprojizierenden optischen Systems (30a) so angeordnet ist, dass die Nut (FA) des Rands mit dem Messlichtstrahl aus einer Richtung senkrecht zu einer Tangentenlinie (T) der Nut (FA) des Rands bestrahlt wird.

4. Brillenfassungsformmessvorrichtung (1) nach einem der Ansprüche 1 bis 3, ferner umfassend:
Korrekturmittel zum Korrigieren der Querschnittsform der Nut (FA) des Rands, basierend auf einem ersten Neigungswinkel (β) in einer horizontalen Richtung in Bezug auf eine senkrechte Achse (A) senkrecht zu der Schnittebene (S) und einem zweiten Neigungswinkel (γ) in einer vertikalen Richtung in Bezug auf die senkrechte Achse (A) senkrecht zu der Schnittebene (S) auf der lichtempfangenden optischen Achse (L2) des lichtempfangenden optischen Systems (30b).

## Revendications

1. Appareil de mesure de forme de monture de lunettes (1) pour mesurer une forme d'une monture de lunettes (F), comprenant :
un système optique de projection de lumière (30a) configuré pour irradier une rainure (FA) d'un bord de la monture de lunettes (F) avec un faisceau lumineux de mesure émis par une source de lumière (31) ; et
un système optique de réception de lumière (30b) configuré pour recevoir un faisceau lumineux réfléchi du faisceau lumineux de mesure réfléchi sur la rainure (FA) du bord de la monture de lunettes (F) par un détecteur (37),
dans lequel le système optique de projection de lumière (30a) et le système optique de réception de lumière (30b) sont configurés pour être disposés à l'intérieur de la rainure (FA) du bord de la monture de lunettes (F) dans une direction de vecteur de rayon,
dans lequel un plan de projection de lumière et de réception de lumière (D) formé par un axe optique de projection de lumière (L1) du système optique de projection de lumière (30a) et un axe optique de réception de lumière (L2) du système optique de réception de lumière (30b) sont configurés pour être disposés de manière à être inclinés par rapport à un plan de coupe (S) parallèle ou oblique à une direction de profondeur de la rainure (FA) où la rainure (FA) du bord est coupée par le faisceau lumineux de mesure,
dans lequel la source de lumière (31) est configurée pour irradier la rainure (FA) du bord depuis un intérieur du bord avec le faisceau lumineux de mesure, et le détecteur (37) est configuré pour détecter le faisceau lumineux réfléchi à l'intérieur du bord pour acquérir une forme de section transversale de la rainure (FA) du bord, **caractérisé en ce que**
l'axe optique de projection de lumière (L1) du système optique de projection de lumière (30a) est configuré pour être disposé de manière à être incliné par rapport à un plan de vecteur de rayon de la rainure (FA) du bord.

2. Appareil de mesure de forme de monture de lunettes (1) selon la revendication 1, comprenant en outre :
une unité de maintien (25) maintenant le système optique de projection de lumière (30a) et le système optique de réception de lumière (30b) ;
un moyen de changement (210, 260) pour déplacer l'unité de maintien (25) par rapport à la monture de lunettes (F) ; et
un moyen de commande de changement (50) pour commander le moyen de changement (210, 260),
dans lequel le moyen de commande de changement déplace l'unité de maintien (25) à l'intérieur du bord de la monture de lunettes (F) pour changer une position de mesure par rapport à la rainure (FA) du bord de la monture de lunettes (F).

3. Appareil de mesure de forme de monture de lunettes (1) selon la revendication 1 ou 2,
dans lequel l'axe optique de projection de lumière (L1) du système optique de projection de lumière (30a) est disposé de sorte que la rainure (FA) du bord soit irradiée avec le faisceau lumineux de mesure depuis une direction perpendiculaire à une ligne tangente (T) de la rainure (FA) du bord.

4. Appareil de mesure de forme de monture de lunettes (1) selon l'une quelconque des revendications 1 à 3, comprenant en outre :
un moyen de correction pour corriger la forme de section transversale de la rainure (FA) du bord, sur la base d'un premier angle d'inclinaison (β) dans une direction horizontale par rapport à un axe perpendiculaire (A) perpendiculaire au plan de coupe (S) et d'un second angle d'inclinaison (γ) dans une direction verticale par rapport à l'axe perpendiculaire (A) perpendiculaire au plan de coupe (S) sur l'axe optique de réception de lumière (L2) du système optique de réception de lumière (30b) .
